# EUROPEAN PATENT APPLICATION

(11) **EP 1 538 448 A1**
(43) Date of publication of application: **08.06.2005**
(21) Application number: 04257422.8
(22) Date of filing: 30.11.2004
(51) Int. Cl.: G01P 3/49, F01D 17/06

(54) **Eddy current sensors**

(30) Priority: 03.12.2003 GB 0328049
(71) Applicant: WESTON AEROSPACE LIMITED, Farnborough, Hants GU14 7PW (GB)
(72) Inventor: Proctor, Kenneth W., Farnborough, Hampshire GU14 7PW (GB); Maunder, Christopher David, Farmborough, Hampshire GU14 7PW (GB)
(74) Representative: Vleck, Jan Montagu

(57) **Abstract**

An inductive eddy current sensor, for use for example for measuring the speed of a turbine by detecting the passage of turbine blades (21) past a probe incorporating the sensor, includes a magnet (23) positioned so that the blades (21) pass through the flux pattern generated by the magnet (23). At least one pick-up coil (28) devoid of a core of soft magnetic is positioned alongside the magnet to pick up signals generated by eddy currents generated in the turbine blades as they cut through the flux pattern, without thereby altering the flux pattern. In a modified arrangement, the pick-up coil surrounds the magnet, again without affecting the flux pattern.

## Description

### BACKGROUND OF THE INVENTION

This invention relates to eddy current sensors for sensing the movement of an electrically conductive member along a path. Such sensors are used as speed or torque sensing probes for example for sensing the speed of the blades of the compressor or turbine of a gas turbine. Torque in a rotating member may be assessed by using two sensing probes for sensing the rotation of the member at two axially-spaced positions and determining the phase difference between the outputs of the probes.

### PRIOR ART

An example of such a probe is disclosed in GB 2 265 221. The probe uses a strong and large magnet to form a strong magnetic field. When a metal object such as a turbine blade passes through the field, eddy currents are generated in the blade. The probe includes a pick-up coil for detecting the very small magnetic fields generated by the eddy currents induced in the tip of a moving blade. To do this task, the coil needs to have a large number of turns, typically 5,000, wound on a core or pole piece made of a soft magnetic material having a high permeability. As a result of this coil construction, its inductance is very large, typically 1 or 2 henries.

### SUMMARY OF THE INVENTION

For gas turbine applications, the probe is mounted outside on the turbine casing, resulting in a large air gap between the sensor and the tips of the blades. To increase the signal picked up in the coil, the magnetic field should be as strong as possible at the operating distance. This is achieved by selecting a very long wide magnet.

According to the present invention, there is provided an inductive sensor for sensing the movement of an electrically conductive member as the member moves along a path, comprising a magnet having a pole adjacent the path of the member for generating a magnetic flux pattern in the path of the member, and an eddy current detector element positioned adjacent the said path to receive magnetic pulses caused by eddy currents generated in the said member as it moves through the flux pattern generated by the magnet pole , wherein the detector element has minimal magnetic susceptibility so as to leave substantially undistorted the flux pattern generated by the magnetic pole in the path of the member. Conveniently, the detector element is in the form of a pick-up coil devoid of a core of any soft magnetic material and thus effectively an air-cored coil.

With the known arrangement, the pick-up coil has to be as close to the magnet as possible to minimise space and to maximise the signal picked up. As a result, the magnetic field is attracted to the core of the pick-up coil so the strength of the field through which the blade tips pass is reduced. Thus, the portions of the blade passing at a distance of typically 10 to 12 mm from the magnet are not exposed to a strong magnetic field and the resulting eddy currents are weakened..

The magnetic core of the coil increases the coil inductance resulting in a low resonance frequency and high impedance of the coil. The presence of resonance in the coil distorts the output signal amplitude of the probe. The signal may well have superimposed on it an oscillating signal resulting in several zero crossings giving a false speed reading. Moreover, the current in a coil having a large inductance decays very slowly affecting the amplitude of the subsequent signals and changing the position of the zero crossings.

Further, sensors with coils having a large impedance are much more susceptible to electromagnetic interference. A sensor having a large inductance cannot be used in areas which must be intrinsically safe because the inductance stores a lot of energy and could generate a spark igniting an explosive gas mixture.

To solve the above problems the invention removes the conventional soft magnetic core from the probe coil.

### BRIEF DESCRIPTION OF THE DRAWINGS

The invention will now be further described by way of example with reference to the accompanying diagrammatic drawings in which:-
Figure 1 shows a blade passing through the magnetic flux of a permanent magnet in the absence of a pick-up coil;
Figure 2 shows a blade passing a known type of probe;
Figures 3, 4 and 5 are views of three alternative arrangements corresponding to that shown in Fig. 2;
Figures 6 and 7 are perspective views of arrangements of the kinds shown in Figs. 3 and 5 respectively for use with compressor blades of a gas turbine;
Figure 8 is a diagrammatic tangential view of an arrangement similar to that of figure 6 but in which the blades are angled relative to their direction of motion;
Figure 9 shows a modification of figure 8; and
Figure 10 is a simplified exploded perspective view of a probe embodying the invention.

### BACKGROUND DESCRIPTION

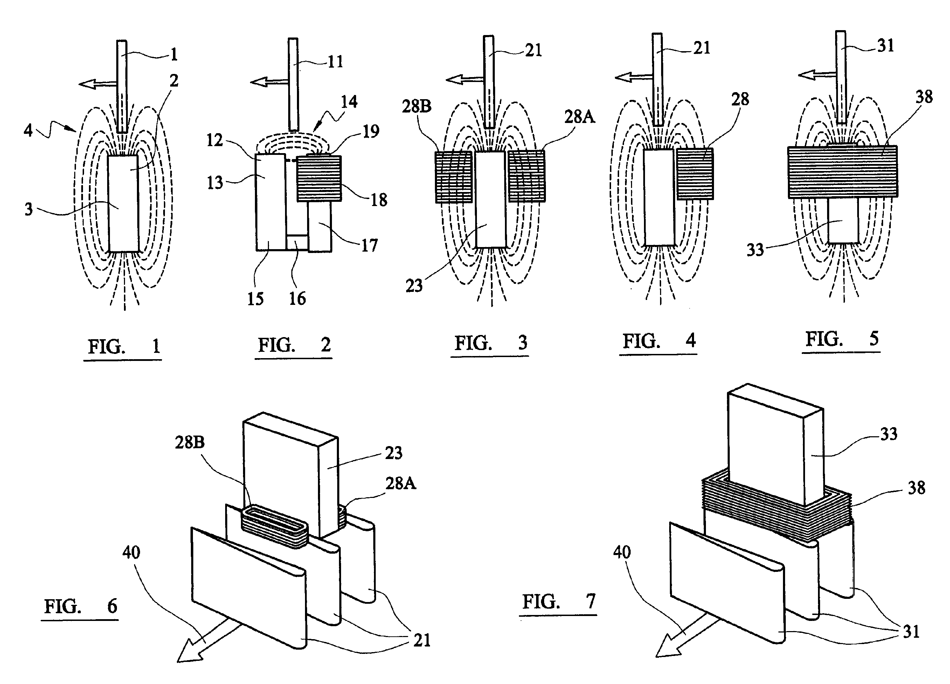

Figure 1 shows a turbine blade 1, moving past a pole 2 of a magnet 3 (typically a permanent magnet) which generates a flux pattern indicated at 4. In Fig. 1, there is no pick-up coil so the flux pattern 4 extends well into the path of the turbine blade 1 with the result that eddy currents are generated in the turbine blade 1.

Figure 2 shows the known type of probe. The second pole 15 of the magnet 13 is fixed to a yoke 16 which in turn is fixed to the high permeability core 17 of a pick-up coil 18. As a result of the magnetic circuit formed by the magnet 13, yoke 16 and core 17, the flux pattern 14 is concentrated close to the pole 12 and the end 19 of the core 17 is largely missed by the turbine blade 11, bearing in mind the inevitable large spacing between the probe and the turbine blades 11. When the core 17 is placed close to the magnet 13 it will "short circuit" the magnetic flux. This means that the strength of the magnetic flux 14 through which the blade passes will be reduced. As a result, the eddy currents generated in the turbine blades 11 are considerably smaller than those generated in the system shown in Fig. 1.

### DESCRIPTION OF PREFERRED EMBODIMENTS

Figures 3 and 6 show one arrangement in accordance with the invention. Here the magnet 23 has a pick-up coil 28a adjacent it on one side and a further pick-up coil 28b on the opposite side. Both the coils 28a and 28b are formed without any core of magnetic material and have their axis parallel to the magnetic axis of the magnet. Figure 4 shows a modification of the arrangement shown in Fig. 3, having only a single coil 28. This configuration allows space for a larger magnet, whereas the arrangement of Fig. 3 is suitable for use where the probe is to fit into a circular envelope.

As shown in Fig. 5, for some applications the coil 38 can be wound around the permanent magnet 33, thus providing a very compact construction but with a different signal output to that of Figs. 3 and 4. Although made of magnetic material, the permanent magnet 33 cannot act as a core for the coil in the manner of a soft-iron core and so the coil acts as if it had no magnetic core.

This arrangement is also shown in Fig. 7. In Fig. 6 and 7, the blades 21, 31 are compressor blades thus having thin and long cross-sections. Accordingly, the magnets 23, 33 and coils 28, 38 are elongated to conform to the general shape of the compressor blades 21, 31.

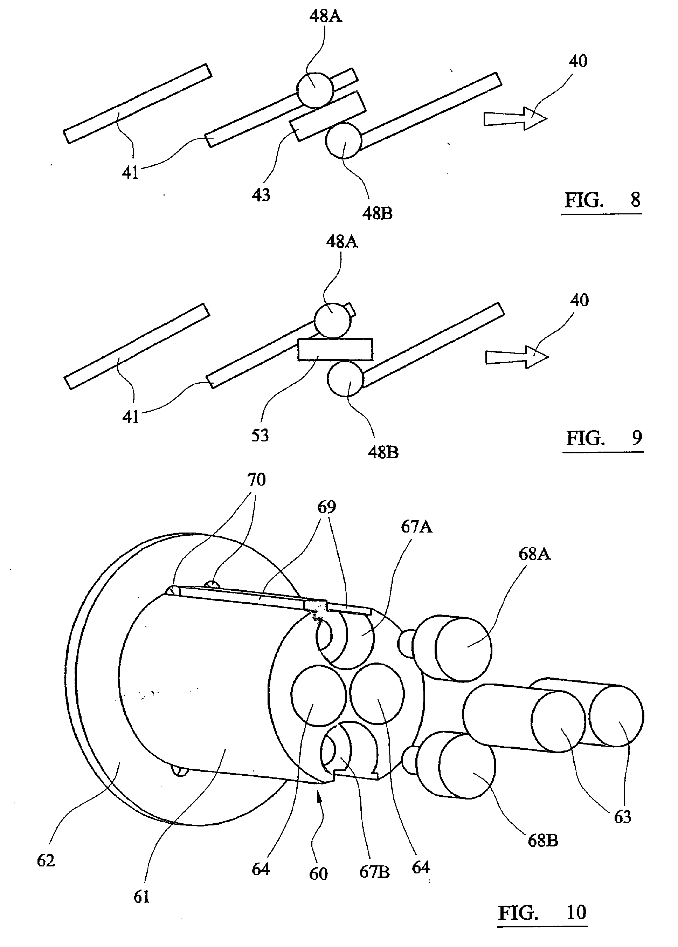

In the arrangement shown in Fig. 8, the blades 41 are angled relative to their direction of travel 40 and the assembly of magnet 43 and pick-up coils 48a, b, is correspondingly angled.

In the modified arrangement shown in Fig. 9, however, the longer sides of the magnet 53 are parallel to the direction of travel 40, with the coils 58a, b, positioned on each side. This arrangement is found to produce a stronger signal than the arrangement shown in Fig. 8.

Fig. 10 shows a mounting arrangement for the sensor to form a probe which thus comprises a housing 60 of non-magnetic material having a generally cylindrical body 61, which in use projects through the casing of an engine, and a mounting flange 62 by means of which the probe is secured to the engine casing. The magnet is here formed by a pair of cylindrical permanent magnets 63 of the same polarity received in boxes 64 in the body 61.

The body 61 has two further boxes 67a, 67b, one on each side of the pair of magnets 63, to receive the pick-up coils 68a, 68b. The cylindrical surface of the body 61 is formed with channels 69 leading to apertures 70 in the mounting flange 62 to receive the connecting wired for the coils.

By providing the or each coil with a further coil without a core in a configuration as shown in GB 2 265 221 it is possible to make the probe less susceptible to the interference of external magnetic fields.

Thus, a further coil (not shown) again without a core of soft magnetic material, maybe positioned coaxially with the or each pick up coil 28, 38, 48, 58 or 68 but further from the path of the blades. By connecting the pick up and further coils in opposition, the effects of external electromagnetic field may be largely cancelled out with only minor reduction in the pick up signal since the further coil will only pick up a much reduced signal as the result of its greater distance from the path of the blades.

The probes shown in Figs. 3 to 10 may be used to measure the speed of any metallic non-ferromagnetic object with at least one discrete member such as the tooth of a gearwheel, a phonic wheel, a shaft with a slot or protrusion or the blades of a fan in which eddy currents are generated in the member as it rotates through the flux pattern.

While the magnets will normally be permanent magnets for convenience, it would be possible to use electromagnets provided that they are fully saturated in use.

## Claims

1. An inductive eddy current sensor for sensing the movement of an electrically conductive member (21) as the member moves along a path (40), comprising a magnet (23) having a pole adjacent the path of the member for generating a magnetic flux pattern in the path (40) of the member (21), and an eddy current detector element positioned adjacent the said path to receive magnetic pulses caused by eddy currents generated in the said member as it moves through the flux pattern generated by the pole, **characterised in that** the detector element (28) has minimal magnetic susceptibility so as to leave substantially undistorted the flux pattern generated by the magnet (23) in the path of the member (21).

2. An inductive sensor according to claim 1, wherein the detector element (28) is in the form of a pick-up coil devoid of a core of any soft magnetic material.

3. An inductive sensor according to claim 1 or 2, wherein there are two detector elements (28a, 28b) positioned adjacent the magnet (23) on opposite sides thereof.

4. An inductive sensor according to claim 2, wherein the pick-up coil (38, Fig. 7) surrounds the magnet (33).

5. An inductive sensor according to any one of claims 2 to 4, and including a further coil for each said pick up coil, the or each further coil being coaxial with the corresponding pick up coil but spaced further from the said path and being connected in opposition to the corresponding pick up coil.

6. An inductive sensor according to any preceding claim wherein the magnet (63, Fig. 10) and the or each (68) are mounted in respective pockets (64, 67) in one end of a body (64) of non-magnetic material, the body having a mounting flange (62) at the opposite end thereof.
